# EUROPÄISCHE PATENTANMELDUNG

(11) **EP 4 464 740 A1**
(43) Veröffentlichungstag der Anmeldung: **20.11.2024**
(21) Anmeldenummer: 23173383.3
(22) Anmeldetag: 15.05.2023
(51) Int. Cl.: C08K 3/32

(54) **EMISSIONS- UND GERUCHSMINDERUNG VON ALTGUMMI MITTELS PPA BEI DER VERWENDUNG VON GUMMIMODIFIZIERTEM BITUMEN UND ASPHALT**

(71) Anmelder: LANXESS Deutschland GmbH, 50569 Köln (DE)
(72) Erfinder: KLEIN, Herr Thomas, 69126 Heidelberg (DE); MORITZ, Herr Ralf-Johann, 41469 Neuss (DE)

(57) **Zusammenfassung**

Die Erfindung betrifft ein Verfahren zur Verringerung der Benzothiazolemission beim Erwärmen von Gummi enthaltend Benzothiazol und/oder beim Erwärmen Benzothiazolabspaltende Substanzen, wobei die Erwärmung in Gegenwart von Polyphosphorsäure (PPA) erfolgt.

## Beschreibung

Seit Jahrzehnten wird Altreifengummi als Modifizierungsmittel für Bindemittel (Bitumen) bei asphaltbasierten Straßendecken wiederverwertet. Während die Verwendung von natürlichem Gummi als Modifizierungsmittel von Bitumen schon auf das 19 Jahrhundert zurückgeht, wurde gemahlenes Gummigranulat aus Altreifen erstmals 1960 in diesem Zusammenhang eingesetzt.

Gummi, ob natürlichen oder synthetischen Ursprungs, ob als wiederverwertetes Abfallmaterial aus Altreifen, dient als polymeres Modifikationsmittel für Bitumen. Polymere erweitern den Temperaturbereich, bei dem Bitumen als Bindemittel im Straßenbelag hinreichend gute Eigenschaften (u. a. Vermeidung von bleibender Verformung, und Rißbildung) aufweist. Altreifengummi erweist sich als nachhaltige Alternative zu synthetischen Polymeren, da das Material als Abfall anfällt und die Lagerung in Deponien oder die thermische Verwertung mit entsprechender CO₂-Freisetzung vermieden werden.

Altreifengummi zeigt jedoch einige Nachteile, die der breiten Anwendung entgegenstehen können. So ist es als vulkanisiertes Material durch die Vernetzung über Schwefelbrücken schlecht mit Bitumen mischbar. Dies kann mit Hilfe von Additiven erleichtert werden, wie z.B. in WO2017032661 und WO2021028290 beschreiben.

Gummi insbesondere Gummi aus Altreifen kann Benzothiazol enthalten, wenn dieses als Additiv bei der Herstellung zugesetzt wurde. Weiterhin können dem Gummi bei seiner Herstellung Substanzen zugesetzt worden sein, welche bei Erwärmung Benzothiazol abspalten können, wie z.B. 2-Mercaptobenzothiazol oder Amiden von Benzothiazol oder 2-Mercaptobenzothiazol. Im Zusammenhang mit der Erfindung sind unter Substanzen, welche bei Erwärmung Benzothiazol abspalten können vorzugsweise Verbindungen zu verstehen, die bei 160°C, besonders bevorzugt bei einer Temperatur von 120°C bis 160°C und meist bevorzugt bei einer Temperatur von 100°C bis 120°C Benzothiazol abspalten. Die Verwendung von Benzothiazol bzw. bei Erwärmung Benzothiazol abspaltender Substanzen als Additive für Gummi ist regional sehr unterschiedlich und erfolgt z.B. deutlich häufiger in Europa als in Asien oder den USA. Diese Additive werden meist bei der Herstellung von PKW-Reifen eingesetzt, können aber auch bei LKW-Reifen verwendet werden.

Die Freisetzung von Benzothiazol beim Erwärmen von Gummi auf Temperaturen von über 100°C ist problematisch. So sind in der jüngsten Zeit Bedenken hinsichtlich der Emissionen beim Straßenbau in den Fokus gerückt, wie in Patrik T Nilsson et al., Annals of Work Exposures and Health, Vol 62, Issue 7, August 2018, Pages 828-839 beschrieben. Obwohl Gummi als Modifizierungsmittel die Emission von flüchtigen, Kohlenwasserstoff-basierten Bestandteile des Bitumens nicht wesentlich erhöht und zum Teil sogar senkt, ist stellt die Anwesenheit von Benzothiazol sowohl eine olfaktorische als auch eine toxikologische Beeinträchtigung der Umgebung insbesondere bei der Verwendung von Altreifengummi dar.

Ein weiteres bereits zur Modifikation von Bitumen verwendetes Additiv ist die Polyphosphorsäure (PPA). Letztere wurde vereinzelt als Modifikator für das Fließverhalten und den Erstarrungspunkt von Bitumen oder Asphalt eingesetzt, um im Winter die Rissbildung zu verringern oder in heißen Sommern die Spurrillenbildung zu unterdrücken. Eine Verwendung zusammen mit Gummimehl bzw. zerkleinerten Altreifen ist zwar offenbart, z.B. in G. Yadollahi et al., Construction and Building Materials 25 (2011) 3108-3116, nicht jedoch in Kombination mit Gummi enthaltend Benzothiazol und/oder beim Erwärmen Benzothiazol-abspaltende Substanzen.

Es bestand daher Bedarf an einem Verfahren zur Reduktion der Benzothiazolemission beim Erwärmen von Benzothiazol und/oder beim Erwärmen Benzothiazol-abspaltende Substanzen enthaltenden Gummi insbesondere beim Verfahren zur Herstellung von Asphalt durch Erwärmung von Asphaltbindemittel (Bitumen) und Benzothiazol und/oder beim Erwärmen Benzothiazol-abspaltende Substanzen enthaltendem Gummi.

Überraschenderweise wurde nun gefunden, dass eine Verringerung der Benzothiazolemission beim Erwärmen von Gummi enthaltend Benzothiazol und/oder beim Erwärmen Benzothiazol-abspaltende Substanzen, dadurch erreicht werden kann, dass die Erwärmung in Gegenwart von Polyphosphorsäure (PPA) erfolgt.

Die vorliegende Erfindung betrifft somit ein Verfahren zur Verringerung der Benzothiazolemission beim Erwärmen von Gummi enthaltend Benzothiazol und/oder beim Erwärmen Benzothiazol-abspaltende Substanzen, wobei die Erwärmung in Gegenwart von Polyphosphorsäure (PPA) erfolgt.

Bevorzugt wird das Verfahren zur Verringerung der Benzothiazolemission beim Erwärmen von Gummi enthaltend Benzothiazol angewendet.

Die Erwärmung erfolgt dabei typischerweise auf eine Temperatur von mindestens 100°C, bevorzugt von zwischen 100°C und 190°C und besonders bevorzugt von zwischen 120°C und 160°C.

Als Gummi werden bevorzugt zerkleinerte Altreifen, besonders bevorzugt Gummimehl aus Altreifen eingesetzt. Das Gummimehl kann sowohl warm als auch kryogen vermahlen sein, wie es beispielsweise von der Firma MRH Mülsener Rohstoff und Handelsgesellschaft mbH angeboten wird.

In einer bevorzugten Ausführungsform werden vor dem Erwärmen die Phosphorsäure und das Gummi enthaltend Benzothiazol und/oder beim Erwärmen Benzothiazol-abspaltende Substanzen gemischt.

Bevorzugt wird die Polyphosphorsäure homogen auf der Oberfläche der Gummis aufgebracht. Zum Aufbringen der PPA auf die Oberfläche des Gummis kann jede Art von Mischer verwendet werden, der zur Herstellung eines homogenen Feststoffgemisches geeignet ist. Dies können beispielweise ein Ultra Turrax Rührer oder ein Pflugscharmischer sein, egal ob dieser eine horizontale oder vertikaler Bauweise aufweist. Alternativ kann auch ein Sprühprozess angewandt werden, in dem erwärmte, flüssige Polyphosphorsäure durch eine Düse zu einem Nebel verstäubt wird, der sich dann auf der Oberfläche des Gummis niederschlägt.

Als Polyphosphorsäure können Polyphosphorsäuren des Typs PPA 95% bis PPA 124%, bevorzugt des Typs PPA 100% bis PPA 118% und besonders bevorzugt des Typs PPA 105% bis 115% verwendet werden. Die Zahlenangaben bezieht sich dabei auf die Konzentration der Polyphosphorsäure. Konzentrationen größer 100% sind möglich, weil der Anteil an P₂O₅ in H₃PO₄ einbezogen wird.

Polyphosphorsäuren (PPA) entstehen beispielsweise durch partielle Hydrolyse von Phosphorpentoxid mit unterstöchiometrischen Mengen an Wasser. Neben partiell hydrolysierten cyclischen Verbindungen bestehen die Polyphosphorsäuren im Wesentlichen aus linearen Molekülen der allgemeine Formel H₍ₙ₊₂₎O₍₃ₙ₊₁₎Pₙ, wie sie beispielsweise in Brief review of the chemistry of polyphosphoric acid (PPA) and bitumen, J.-F. Masson Energy & Fuels, v. 22, no. 4, June 2008, pp. 2637-2640 beschrieben sind.

Typischerweise wird die Polyphosphorsäuere in einer Menge von 0,5 bis 20 Gew.-%, bevorzugt von 3 bis 10 Gew.-% und besonders bevorzugt von 5 bis 7 Gew.-% bezogen auf das Gummi verwendet.

Idealerweise wird das Verfahren zur Verringerung der Benzothiazolemission bei der Herstellung von Asphalt aus Gummi und Bitumen eingesetzt.

Die vorliegende Erfindung betrifft somit ein Verfahren zur Herstellung von Herstellung von Asphalt unter reduzierter Benzothiazolemission, beinhaltend die Mischung und Erwärmung von:
a) Gummi enthaltend Benzothiazol und/oder beim Erwärmen Benzothiazol-abspaltende Substanzen,
b) Bitumen
c) Polyphosphorsäure (PPA).

Bevorzugt wird bei das Verfahren bei der Herstellung von Asphalt unter Verwendung von Gummi enthaltend Benzothiazol eingesetzt.

Als Gummi werden bevorzugt zerkleinerte Altreifen, besonders bevorzugt Gummimehl aus Altreifen eingesetzt. Das Gummimehl kann sowohl warm als auch kryogen vermahlen sein.

Die Erwärmung erfolgt dabei typischerweise auf eine Temperatur von mindestens 100°C, bevorzugt von zwischen 100°C und 190°C und besonders bevorzugt von zwischen 120°C und 160°C.

In einer bevorzugten Ausführungsform werden vor dem Erwärmen die Phosphorsäure und das Gummi enthaltend Benzothiazol und/oder beim Erwärmen Benzothiazol-abspaltende Substanzen gemischt und anschließend mit dem bereits auf eine Temperatur von mindestens 100°C, bevorzugt von zwischen 100°C und 190°C und besonders bevorzugt von zwischen 120°C und 160°C erwärmten Bitumen vermengt.

Bevorzugt wird die Polyphosphorsäure homogen auf der Oberfläche des Gummis aufgebracht.

Als Polyphosphorsäure können Polyphosphorsäuren des Typs PPA 95% bis PPA 124%, bevorzugt des Typs PPA 100% bis PPA 118% und besonders bevorzugt des Typs PPA 105% bis 115% verwendet werden.

Typischerweise wird die Polyphosphorsäuere in einer Menge von 0,5 bis 20 Gew.-%, bevorzugt von 3 bis 10 Gew.-% und besonders bevorzugt von 6 bis 8 Gew.-% bezogen auf das Gummi verwendet.

Die vorliegende Erfindung betrifft weiterhin die Verwendung von Polyphosphorsäure zur Verminderung der Benzothiazolemission beim Erwärmen von Gummi enthaltend Benzothiazol und/oder beim Erwärmen Benzothiazol-abspaltende Substanzen, sowie die Verwendung von Polyphosphorsäure zur Verminderung der Benzothiazolemission bei der Herstellung von Asphalt aus Gummi enthaltend Benzothiazol und/oder beim Erwärmen Benzothiazol-abspaltende Substanzen und Bitumen unter Erwärmung dieser Stoffe, insbesondere in den oben gezeigten Ausführungsformen.

Die vorliegende Erfindung betrifft weiterhin Asphalt enthaltend:
a) Gummi enthaltend Benzothiazol und/oder beim Erwärmen Benzothiazol-abspaltende Substanzen,
b) Bitumen
c) Polyphosphorsäure (PPA).

Die vorliegende Erfindung betrifft weiterhin Asphalt der unter Anwendung des erfindungsgemäßen Verfahrens zur Verringerung der Benzothiazolemission beim Erwärmen von Gummi bzw. durch das erfindungsgemäße Verfahren zur Herstellung von Asphalt erhältlich ist.

### Beispiele

Zum Nachweis der Reduktion der Emissionen und geruchsbildenden Komponenten wurde die sogenannte Purge and Trap-GC-MS-Technologie[6] verwendet, die die Zuordnung der Einzelmoleküle über ihr Massespektrum erlaubt, sowie die Gehaltsbestimmung der flüchtigen Komponenten in der Umluft über die Peakflächen im GC-Spektrogramm.

In einem Beispiel wurde kryogen vermahlenes Gummimehl aus LKW-Reifen europäischer Herkunft, mit einer Korngröße von 0,2 - 0,4 mm mit verschiedenen Mengen an Polyphosphorsäure PPA 118%, PPA 115%, PPA 108% und PPA 105% versetzt und mittels eines Ultra Turrax Rührers (Homogenisierer T 25 Basic) innig vermischt. Gummimehl aus PKW-Reifen kann in analoger Art und Weise behandelt werden.

In einem anderen Beispiel wurde das kaltvermahlene Gummimehl mm mit verschiedenen Mengen an Polyphosphorsäure PPA 118%, PPA 115%, PPA 108% und PPA 105% versetzt und mittels eines gängigen Flügelrührers für den Laborbedarf innig vermischt.

In beiden Fällen wurden 0 bis 10 Gew.-% PPA bezogen auf Gummimehl eingesetzt und ca. 30-45 Minuten innig vermischt. Anschließend wurden alle Proben auf 120°C beziehungsweise 160°C erhitzt und die flüchtigen Bestandteile aus dem kaltvermahlenen Gummimehl vollständig ausgetrieben und in einer Kältefalle kondensiert und gesammelt. Anschließend wurde die Falle aufgeheizt und die Analyten gebündelt dem GCMS-Spektrometer zugeführt.

Bei allen Proben, bei denen mindestens 0,5 Gew.-% PPA bezogen auf Gummimehl eingesetzt wurde, konnte eine Reduktion der freigesetzten Menge an Benzothiazol beobachtet werden. Bei Zugabe von mindestens 6 Gew.-% PPA zum Gummimehl konnte die Emission von Benzothiazol sowohl bei 120°C als auch bei 160°C in allen Fällen vollständig unterdrückt werden.

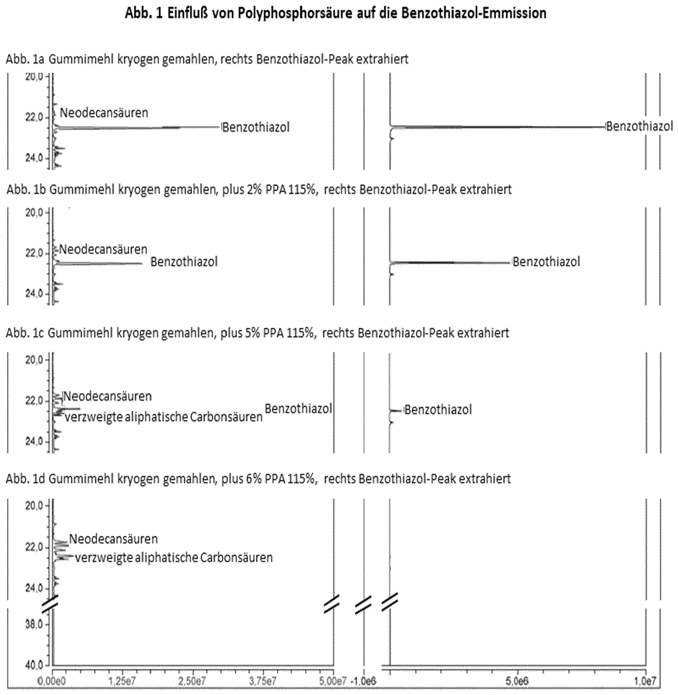

In Abbildung 1 ist die unterdrückende Wirkung von PPA am Beispiel von kryogen gemahlenem Gummimehl ohne PPA, kryogen gemahlenem Gummimehl mit 2% PPA 115%, kryogen gemahlenem Gummimehl mit 5% PPA 115% und kryogen gemahlenem Gummimehl mit 6% PPA 115% bei 120°C auf Benzothiazol dargestellt. Die Daten wurden per P&T GCMS ermittelt und zeigen Ausschnitte bei der typischen Retentionszeit von Benzothiazol bei ca. 22,45 min. Auf der rechten Seite ist die Extraktion des Benzothiazol-Peaks dargestellt.

## Patentansprüche

1. Verfahren zur Verringerung der Benzothiazolemission beim Erwärmen von Gummi enthaltend Benzothiazol und/oder beim Erwärmen Benzothiazol-abspaltende Substanzen, wobei die Erwärmung in Gegenwart von Polyphosphorsäure (PPA) erfolgt.

2. Verfahren gemäß Anspruch 1, wobei die Erwärmung auf eine Temperatur von mindestens 100°C, bevorzugt von zwischen 100°C und 190°C und besonders bevorzugt von zwischen 120°C und 160°C erfolgt.

3. Verfahren gemäß Anspruch 1 oder 2, wobei vor dem Erwärmen die Phosphorsäure und das Gummi enthaltend Benzothiazol und/oder beim Erwärmen Benzothiazol-abspaltende Substanzen gemischt werden.

4. Verfahren gemäß einem oder mehreren der Ansprüche 1 bis 3, wobei als Polyphosphorsäure Polyphosphorsäuren des Typs PPA 95% bis PPA 124%, bevorzugt des Typs PPA 100% bis PPA 118% und besonders bevorzugt des Typs PPA 105% bis 115% verwendet werden.

5. Verfahren gemäß einem oder mehreren der Ansprüche 1 bis 4, wobei die Polyphosphorsäure in einer Menge von 0,5 bis 20 Gew.-%, bevorzugt von 3 bis 10 Gew.-% und besonders bevorzugt von 6 bis 8 Gew.-% bezogen auf das Gummi verwendet wird.

6. Verfahren gemäß einem oder mehreren der Ansprüche 1 bis 5, wobei als Gummi zerkleinerte Altreifen, bevorzugt Gummimehl aus Altreifen eingesetzt werden.

7. Verfahren zur Herstellung von Herstellung von Asphalt unter reduzierter Benzothiazolemission, beinhaltend die Mischung und Erwärmung von:
a) Gummi enthaltend Benzothiazol und/oder beim Erwärmen Benzothiazol-abspaltende Substanzen,
b) Bitumen
c) Polyphosphorsäure (PPA).

8. Verfahren gemäß Anspruch 7, wobei die Erwärmung auf eine Temperatur von mindestens 100°C, bevorzugt von zwischen 100°C und 190°C und besonders bevorzugt von zwischen 120°C und 160°C erfolgt.

9. Verfahren gemäß Anspruch 7 oder 8, wobei vor dem Erwärmen die Phosphorsäure und das Gummi enthaltend Benzothiazol und/oder beim Erwärmen Benzothiazol-abspaltende Substanzen gemischt werden.

10. Verfahren gemäß einem oder mehreren der Ansprüche 7 bis 9, wobei als Polyphosphorsäure Polyphosphorsäuren des Typs PPA 95% bis PPA 124%, bevorzugt des Typs PPA 100% bis PPA 118% und besonders bevorzugt des Typs PPA 105% bis 115% verwendet werden.

11. Verfahren gemäß einem oder mehreren der Ansprüche 7 bis 10, wobei die Polyphosphorsäuere in einer Menge von 0,5 bis 20 Gew.-%, bevorzugt von 3 bis 10 Gew.-% und besonders bevorzugt von 6 bis 8 Gew.-% bezogen auf das Gummi verwendet wird.

12. Verfahren gemäß einem oder mehreren der Ansprüche 7 bis 11, wobei als Gummi zerkleinerte Altreifen, bevorzugt Gummimehl aus Altreifen eingesetzt werden.

13. Verwendung von Polyphosphorsäure zur Verminderung der Benzothiazolemission beim Erwärmen von Gummi enthaltend Benzothiazol und/oder beim Erwärmen Benzothiazol-abspaltende Substanzen.

14. Verwendung von Polyphosphorsäure zur Verminderung der Benzothiazolemission bei der Herstellung von Asphalt aus Gummi enthaltend Benzothiazol und/oder beim Erwärmen Benzothiazol-abspaltende Substanzen und Bitumen unter Erwärmung dieser Stoffe.

15. Verwendung gemäß Anspruch 13 oder 14, wobei die Polyphosphorsäuere in einer Menge von 0,5 bis 20 Gew.-%, bevorzugt von 3 bis 10 Gew.-% und besonders bevorzugt von 6 bis 8 Gew.-% bezogen auf das Gummi verwendet wird.

16. Asphalt erhaltend:
a) Gummi enthaltend Benzothiazol und/oder beim Erwärmen Benzothiazol-abspaltende Substanzen,
b) Bitumen
c) Polyphosphorsäure (PPA).
